Europäisches Patentamt

European Patent Office

Office européen des brevets

(19)

(11) **EP 1 298 534 A2**

(12) **EUROPEAN PATENT APPLICATION**

(43) Date of publication:
**02.04.2003 Bulletin 2003/14**

(51) Int Cl.$^7$: **G06F 17/15**

(21) Application number: **02252615.6**

(22) Date of filing: **12.04.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **28.09.2001 JP 2001299218**<br><br>(71) Applicant: **FUJITSU LIMITED**<br>**Kawasaki-shi, Kanagawa 211-8588 (JP)** | (72) Inventor: **Sato, Makihiko, c/o Fujitsu Limited**<br>**Kawasaki-shi, Kanagawa 211-8588 (JP)**<br><br>(74) Representative: **Stebbing, Timothy Charles et al**<br>**Haseltine Lake & Co.,**<br>**Imperial House,**<br>**15-19 Kingsway**<br>**London WC2B 6UD (GB)** |

(54) **Method and apparatus for Similarity evaluation**

(57) A similarity evaluation program capable of determining similarity between probability models at a high speed (with little calculation) is disclosed. The similarity evaluation program is implemented on an apparatus such as a computer for evaluating similarity between a pair of probability model profiles (definitions) each including multiple items of probability information constituted by a plurality of types of data, and this apparatus is provided with a dynamic programming operation unit for performing arithmetic processing based on dynamic programming techniques using a similarity value indicating similarity between items of probability information included in the respective profiles as an indicator of selecting a path.

# FIG.5

**Description**

The present invention relates to a similarity evaluation method, program and apparatus for determining similarity between probability models and more specifically between sets of information about different probability models, these sets of information being referred to as "profiles" or "definitions" of probability models.

The present disclosure relates to subject matter contained in Japanese Patent application No. 2001-299218 (filed on September 28, 2001).

In the fields of speech recognition and bioinformatics, probability models (mainly, Hidden Markov Models) are used to express generated patterns and homology groups mathematically. The probability models are used to determine which words are produced based on voice patterns or to determine which sequences belong to which homology groups, but there are also cases where it is desired to evaluate similarity between probability models. Research has therefore been carried out into methods of evaluating similarity. For example, researches to evaluate similarity between probability models using the equations below are performed. Note that, the values calculated in eq.1 to eq.3 are respectively referred to as "Kullback-Lieber Distance", "mutual information", and "co-emission probability".

$$H(P\|Q) = \sum_i P(x_i) \cdot \log\left(\frac{P(x_i)}{Q(x_i)}\right) \qquad \cdots \ eq. \ 1$$

$$M(X;Y) = \sum_{i,j} P(x_i, y_j) \cdot \log\left(\frac{P(x_i, y_j)}{P(x_i) \cdot P(y_j)}\right) \qquad \cdots \ eq. \ 2$$

$$p = \sum_{s \in \sigma^*} P_{M_i}(s) \cdot P_{M_j}(s) \qquad \cdots \ eq. \ 3$$

Since each of the equations are well defined as probability properties, similarity between probability models can be reliably evaluated whichever of these equations is used. However, an enormous amount of calculation is necessary to evaluate similarity between probability models whichever equation is used. Consequently, similarity evaluations with these equations can be applied to the probability models for speech recognition, but cannot be applied to the probability models of proteins where the length of a sequence is approximately 1000 for practical purposes.

It is therefore desirable to provide a similarity evaluation method and apparatus for rapidly determining similarity between probability models (with little calculation) and a similarity evaluation program capable of enabling a computer to perform such a similarity evaluation method.

In the present invention, a similarity evaluation method is adopted where, in order to evaluate similarity between a pair of probability model definitions (profiles), each including multiple items of probability information constituted by a plurality of types of probability data, arithmetic processing is carried out based on dynamic programming techniques, employing a similarity value calculated in a similarity value calculating step as an indicator value for path selection.

According to the similarity evaluation method of the present invention, since arithmetic processing that finishes quickly is used, evaluation of similarity between the model definitions (profiles) can be carried out in a short period of time.

When implementing the similarity evaluation method of the present invention, probability model information subjected to evaluation can be taken to be probability model information relating to a Hidden Markov Model. In this case, the similarity value can be calculated based on a plurality of emission probability data in the probability information included in one of the pair of model definitions, and a plurality of emission probability data in the probability information included in the other of the pair of model definitions.

Further, the similarity evaluation method can be implemented in such a manner that the similarity value can be calculated based on a plurality of emission probability data and a plurality of transition probability data in the probability information included in the one of the pair of model definitions, and a plurality of emission probability data and a plurality of transition probability data in the probability information included in the other of the pair of model definitions.

The similarity evaluation method also can be implemented such that the similarity value is calculated by multiplying the cosine squared of an angle made by an emission probability vector constituted by a plurality of emission probability data in the probability information included in the one of the pair of model definitions and an emission probability vector constituted by a plurality of emission probability data in the probability information included in the other of the pair of model definitions, with the cosine squared of an angle made by a transition probability vector constituted by the plurality of transition probability data in the probability information included in the one of the pair of model definitions and a transition probability vector constituted by the plurality of transition probability data in the probability information included in the other of the pair of model definitions.

According to these similarity evaluation methods of the present invention, which take transition probability data into consideration in calculating a similarity value, similarity between two Hidden Markov Models can be evaluated while taking into consideration the existence of I nodes and D nodes.

The similarity evaluation program according to the present invention is structured so that a computer can perform the similarity evaluation method according to the present invention, and the similarity evaluation apparatus according to the present invention is structured so to perform the similarity evaluation method according to the present invention. Consequently, when using the program and apparatus of the present invention, it is possible to evaluate similarity between pairs of probability models rapidly.

Reference will now be made, by way of example only, to the accompanying drawings, wherein:

FIG. 1 is a functional block diagram of a similarity evaluation device of a first embodiment of the present invention;
FIG. 2 is a diagram illustrating an HMM profile constituting a probability model processed by the similarity evaluation device of this embodiment;
FIG. 3 is a diagram illustrating pairwise alignment using dynamic programming methods;
FIG. 4 is a diagram illustrating degree of similarity calculated by the dynamic programming operation unit;
FIG. 5 is a flowchart showing an operating procedure for the dynamic programming operation unit;
FIG. 6A to FIG. 6E are diagrams illustrating the operation of the dynamic programming operation unit;
FIG. 7 is a diagram illustrating results of operations of the dynamic programming operation unit;
FIG. 8 is a diagram illustrating the contents of the operation of the dynamic programming operation unit;
FIG. 9A and FIG. 9B are diagrams illustrating the operation of the dynamic programming operation unit; and
FIG. 10 to FIG. 18 are diagrams illustrating operating results for the dynamic programming operation unit.

The following is a detailed description with reference to the drawings of an embodiment of the present invention.

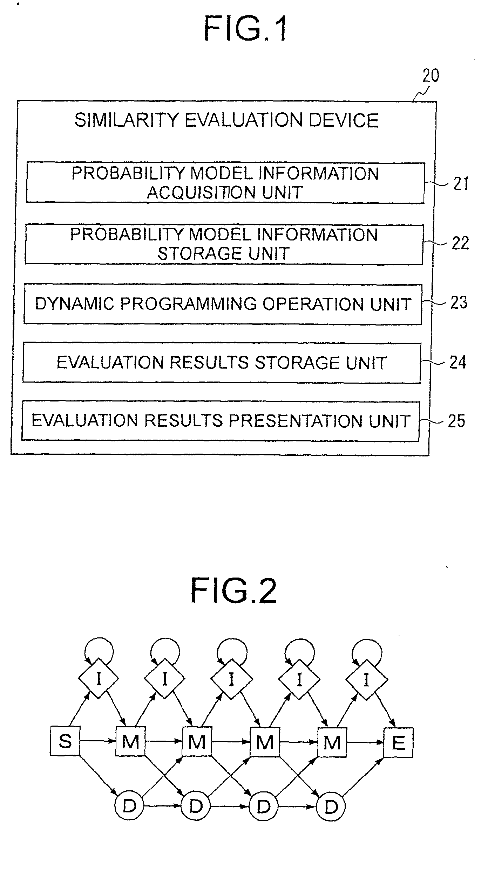

FIG. 1 is a block diagram showing the functions of a similarity evaluation device 10 of an embodiment of the present invention.

As shown in the figure, the similarity evaluation device 10 comprises a probability model information acquisition unit 21, a probability model information storage unit 22, a dynamic programming operation unit 23, an evaluation results storage unit 24 and an evaluation results presentation unit 25.

The probability model information storage unit 22 is a unit for temporarily storing definition information (hereinafter referred to as "probability model information") for two probability models (in this embodiment, HMM (Hidden Markov Model) profiles) to be evaluated for similarity. The probability model information acquisition unit 21 is a unit for storing probability model information within a file designated by an operator or probability model information inputted by an operator into the probability model information storage unit 22. The probability model information acquisition unit 21 also acquires a designation provided by the operator as to which one of first to third evaluation modes (described in detail later) is used to evaluate similarity between probability models.

The dynamic programming operation unit 23 is a unit for performing arithmetic processing in order to evaluate similarity of probability models using an evaluation mode designated by an operator based on two items of probability model information stored in the probability model information storage unit 22. Although described in detail later, arithmetic processing executed by the dynamic programming operation unit 23 is a variation of arithmetic processing employing dynamic programming techniques carried out in the related art for pair-wise alignment.

The evaluation results storage unit 24 is a unit for storing the final results of calculations carried out by the dynamic programming operation unit 23. The evaluation results presentation unit 25 is a unit for carrying out processing for exhibiting evaluation results to an operator (processing for displaying evaluation results, and processing for outputting data for printing out evaluation results) based on information (calculation results) stored in the evaluation results storage unit 24.

The similarity evaluation device 10 of this embodiment is realized as a device where a similarity evaluation program is installed on a relatively high-performance computer, with the probability model information storage unit 22 and the evaluation results storage unit 24 corresponding to the RAM and hard disc provided in the computer. The probability model information acquisition unit 21, dynamic programming operation unit 23 and the evaluation results presentation unit 25 correspond to the computer (portions centered about the CPU) in states of implementing specific portions of the similarity evaluation program.

The following is a detailed description of the operation of the similarity evaluation device 10.

First, a description is given of the HMM profiles constituting the probability models that are to be evaluated for similarity by the similarity evaluation device 10.

The HMM profiles are HMMs expressing base sequences and amino acid sequences. The HMM profile comprises M nodes, I nodes, D nodes, S nodes and E nodes made to correlate with each other via transition probabilities (shown by arrows in the drawing) as shown in the example in FIG. 2.

The M nodes and I nodes constituting this HMM profile are nodes each expressing the state of a certain element of a sequence (sequence alignment). Emission probability of the symbols (with HMMs expressing a base sequence there are four types of emission probability for four types of symbols referred to as A, G, C and T, and with HMMs expressing amino acid sequences, there are twenty types of emission probability) and the probability of a transition to several other nodes (M nodes, I nodes and D nodes) is made to correspond at the M node. Further, at the I node, as with the M node, emission probabilities for a plurality of symbols and several transition probabilities are made to correspond to each other. However, the probability of a transition to an own I node is made to correspond at the I node rather than the probability of a transition to another I node.

On the other hand, a D node is a dummy node to which no emission probability is made to correspond. Only the probability of a transition to several nodes is made to correspond at a D node. An S node is a node expressing the start state (initial state) of this HMM profile and only the probability of a transition to several other nodes is made to correspond at this S node. An E node is a node expressing the end state (final state) of this HMM profile and only emission probability is made to correspond at this E node.

Next, a description is given of arithmetic processing employing dynamic programming techniques carried out in the related art in order to achieve pairwise alignment (in other words, a description is given of the theory of operation of the dynamic programming operation unit 23).

Put in simple terms, pairwise alignment is an operation (process) for obtaining two sequences for which the manner in which elements are lined up is most similar by inserting gaps into appropriate locations of two sequences that are provided.

An outline of pairwise alignment using dynamic programming techniques is now described giving an example of the case where pairwise alignment is carried out on two sequences (character strings) referred to as "AIMS" and "AMOS".

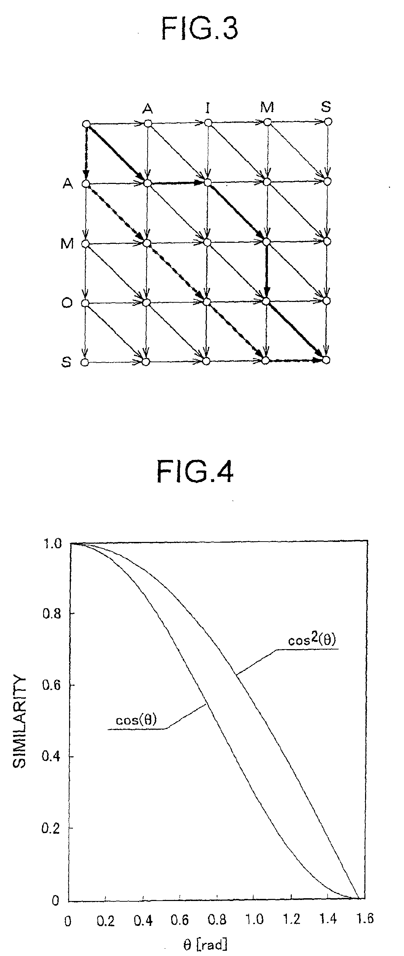

In this case, as shown schematically in FIG. 3, the existence of a matrix containing 5x5 nodes (circles) is assumed, with specific elements of one sequence (referred to in the following as a "first sequence" and in the drawings as "AIMS") to be aligned being made to correspond to a group of nodes lined up in the vertical direction, and specific elements of a further sequence (referred to in the following as a "second sequence" and in the drawings as "AMOS") of a second sequence to be aligned being made to correspond with nodes that are lined up horizontally.

When obtaining pairwise alignment using dynamic programming techniques, each migration path along the direction of the arrows from the node at the upper left end of the matrix to the node at the lower right end can be understood as one alignment (one alignment result for two series). Specifically, with respect to the first sequence, movement along the arrows towards the right can be understood to be an operation of outputting elements (characters) made to correspond to nodes after movement as elements of alignment results, and with regards to the second sequence, movement to the right along the direction of the arrows can be understood to be an operation of outputting gaps as elements of alignment results. Further, with regards to both the first and second sequences, movement at an incline along the direction of the arrows can be understood as an operation for outputting elements (characters) made to correspond to nodes after movement as elements of alignment results. Regarding the first sequence, movement downwards along the direction of the arrows can be understood as an operation of outputting gaps as elements of alignment results, while regarding the second sequence, this movement can be understood as an operation of outputting elements (characters) made to correspond to nodes after movement as elements of alignment results.

Namely, in the figure, the path shown by the dotted line can be understood as showing "-AIMS" and "AMOS-", while the path shown by the thick lined arrows can be understood as showing "AIM-S" and "A-MOS".

If the most similar items from all of the alignment results obtained by expressing as a matrix are shown, then the optimal alignment can be obtained. However, with regards to all of the alignment results, it is desired to evaluate the extent to which the two sequences are similar after alignment, and obtaining the alignment that is the objective is time consuming. Dynamic programming techniques (a method where a solution to a small problem is obtained and this situation is then used to solve a larger problem while expanding this solution) are used in order to shorten this period of time, and the following equation (1) (a recursive formula for i, j) is used while obtaining pairwise alignment using dynamic programming techniques.

$$V_{i,j} = \left\{ \begin{array}{l} w_{i,j} + V_{i-1,\,j-1} \\ d + V_{i,\,j-1} \\ d + V_{i-1,\,j} \end{array} \right\} \qquad \cdots (1)$$

In equation (1), $V_{i,j}$ is an evaluation point (evaluation value) for a path to a node making a first sequence element #i and a second sequence element #j correspond. {} is a function which outputs maximum element, and d is an evaluation point for a deficiency of corresponding elements referred to as "gap penalty" or "gap cost". Further, $w_{i,j}$ is an evaluation point relating to similarity between the first sequence element #i and the second sequence element #j. Note that a value (one of two preset values) corresponding to whether or not both elements coincide is used as $w_{i,j}$ when a base sequence is taken as a subject and a value read out from a table storing w values for each combination of two amino acids is used when an amino acid sequence is taken as the subject.

The calculation of equation (1) is then carried out for each node while increasing i, j while obtaining pairwise alignment using dynamic programming techniques. The optimum alignment is then obtained by storing which of the paths traced was the most appropriate (a plurality is also possible), and then, after completion of all the calculations, tracing the optimum path back (trace back) in reverse from the lower right end.

In short, the pairwise alignment employing dynamic programming techniques can therefore be completed at high speed, because a process is carried out in which every calculation of V value increases paths for which final evaluation points are not calculated (a process in which, with the max function {}, paths for two of three types of path capable of reaching this node are taken to be paths for which calculation of the final evaluation point is not carried out).

The operation of the dynamic programming operation unit 23 and the evaluation results presentation unit 25 of the similarity evaluation device 10 will now be described.

The dynamic programming operation unit 23 is for subjecting the HMM profile to processing of the same theory as for the processing carried out in order to obtain pairwise alignment. The dynamic programming operation unit 23 has three evaluation modes, as described above.

First, the operation of the dynamic programming operation unit 23 is described for the first evaluation mode.

The first evaluation mode is a mode where comparison of two HMM profiles is carried out using only emission probability provided to the M node of each HMM profile. In this first evaluation mode, a matrix comprising (imax + 1) x (jmax + 1) nodes where emission probability vectors for an ith M nodes relating to HMM#0 (one of the two HMM profiles to be subjected to similarity evaluation) are made to correspond to emission probability vectors for jth M nodes relating to HMM #1 (the other of the two HMM profiles to be subjected to similarity evaluation) is assumed (refer to FIG. 3; in the following, this matrix is referred to as an "evaluation value matrix"). Here, imax is the number of M nodes for one of the HMM#0, and jmax is the number of M nodes of the HMM#1.

When evaluation in this first evaluation mode is instructed, the dynamic programming operation unit 23 calculates evaluation values $V_{i,j}$, which are evaluation values for nodes (i, j) of the evaluation matrix, using equation (2) as follows:

$$V_{i,j} = \left\{ \begin{array}{l} \dfrac{S(M_i, M_j) + V_{i-1,\,j-1}}{L} \\[2mm] \dfrac{d + V_{i,\,j-1}}{L'} \\[2mm] \dfrac{d + V_{i-1,\,j}}{L''} \end{array} \right\} \qquad \cdots (2)$$

In equation (2), d is so-called gap cost (gap penalty), and L, L' and L'' are the numbers of the nodes that are passed through to reach node (i, j). The introduction of L, L' and L'' is so that an evaluation value for a path inserted with a large number of gaps are inserted is a relatively small value.

Further, $M_i$ is an emission probability vector for ith M node of HMM#0, and $M_j$ is an emission probability vector for jth M node of HMM#1. $S(M_i, M_j)$ is a function for obtaining a degree of similarity constituted by numerical information exhibiting this similarity from the emission probability vector $M_i$ and the emission probability vector $M_j$. Any function may be employed as $S(M_i, M_j)$ providing that a maximum value (for example, "1") is taken when $M_i$ and $M_j$ are the

same, and a minimum value (for example, "0") is taken when $M_i$ and $M_j$ are completely different (when $M_i$ and $M_j$ are orthogonal). Namely, as shown in FIG. 4, the cosine $\cos(\theta)$ of the angle $\theta$ between the vectors $M_i$ and $M_j$ or the cosine squared $\cos^2(\theta)$ of the angle $\theta$ can be used as $S(M_i, M_j)$, but the dynamic programming operation unit 23 of this embodiment employs the cosine squared $\cos^2(\theta)$ of the angle $\theta$ as $S(M_i, M_j)$.

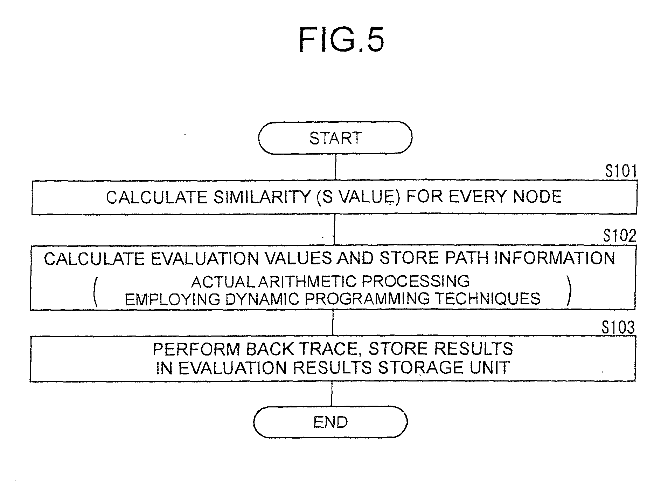

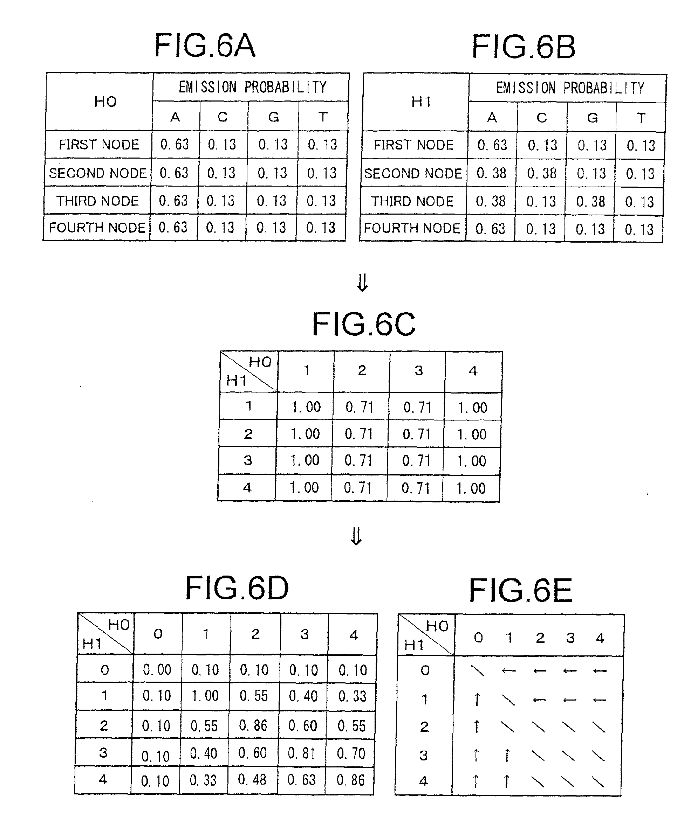

In the following, a specific description will be given of the operation of the dynamic programming operation unit 23 when evaluation in the first evaluation mode is instructed using FIG. 5 and FIG. 6.

As shown in FIG. 5, the dynamic programming operation unit 23 that starts operation in the form instructed as evaluation in the first evaluation mode calculates degree of similarity every node based on the two items of probability model information stored in the model information storage unit 22 (step S101).

For example, the dynamic programming operation unit 23 calculates 16 degrees of similarity in the manner shown in FIG. 6C in step S101 when the probability models H0 and H1 of the content shown in FIG. 6A and FIG. 6B are taken as probability models (HMM profiles) to be evaluated for similarity. Note that, the probability model HO is an item made for homology groups comprising "AAAA" and "AAAA", and the probability model H1 is an item made for homology groups comprising "AAGA" and "ACAA".

The dynamic programming operation unit 23 carries out processing to calculate and internally store evaluation values for each node using sequential calculations employing equation (2) and internally store path information indicating paths employed in calculating evaluation values for each node. In the case shown in FIG. 6, in step S102, the evaluation value group shown in FIG. 6D is calculated and stored, and a path information group exhibiting the state shown in FIG. 6E is stored. Incidentally, FIG. 6E is a diagram showing nodes for which evaluation values have been calculated using paths of diagonal, right, and down being made to correspond to "\", "←" and "↑", respectively.

After completion of step S102 (FIG. 5), the dynamic programming operation unit 23 performs at step S103 a back trace, the results of which are stored in the evaluation results storage unit 24 together with information required by the evaluation results presentation unit 25 (path information relating to portions not yet subject to back-tracing). And the dynamic programming operation unit 23 terminates the process shown in the figure.

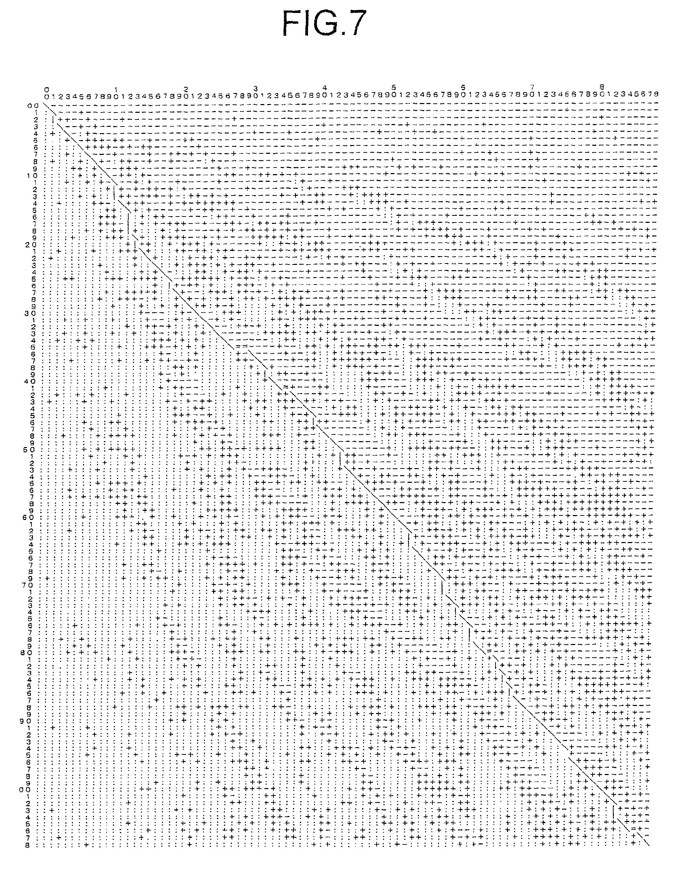

The process for presenting the evaluation results to the operator (processes for displaying or printing the evaluation results) is then carried out by the evaluation results presentation unit 25 based on information stored in the evaluation results storage unit 24. In this process, processing is carried out to display, for example, a graph (symbols lined up in a matrix) of the kind of contents shown in FIG. 7 and a value V for optimum alignment obtained by the back trace.

Note that FIG. 7 is a diagram showing results of performing evaluation using the first evaluation mode on entries Big1 (Bacterial Ig-like domain(group 1)): length 108 and Big2(Bacterial Ig-like domain(group 2)): length 88 of Pfam(http://pfam.wustl.edu) of this application. In FIG. 7, "\", " | ", "=" are back trace portions described by each of the symbols, and portions connected by diagonal, up, and sideways (left) are shown. Further, portions described by each of the symbols "+", ":" and "-" are non-back traced portions and show portions connected from diagonal, up, sideways (left). The degree of similarity (evaluation value) of portions in the figure that are back traced (i.e. aligned) is calculated to be 0.392255.

Next, operation of the dynamic programming operation unit 23 in the second evaluation mode is described centering on differences in operation with the operation of the dynamic programming operation unit 23 in the first evaluation mode.

In the second evaluation mode, comparison of two HMM profiles is carried out using emission probability and the transition probability provided to the M node of each HMM profile.

When evaluation in this second evaluation mode is instructed, the dynamic programming operation unit 23 calculates evaluation values $V_{i,j}$ using equation (3) described in the following.

$$V_{i,j} = \left\{ \begin{array}{l} \dfrac{S(T_i, T_j) \cdot S(M_i, M_j) + V_{i-1, j-1}}{L} \\[2mm] \dfrac{d + V_{i, j-1}}{L'} \\[2mm] \dfrac{d + V_{i-1, j}}{L''} \end{array} \right. \qquad \cdots (3)$$

In eq.3, $T_i$ is a transition probability vector for ith M node of HMM#0, and $T_j$ is an emission probability vector for jth M node of HMM#1. $S(T_i, T_j)$ is the degree of similarity between the two transition probability vectors ($S(T_i, T_j)$ is cosine squared of the angle made by the two vectors).

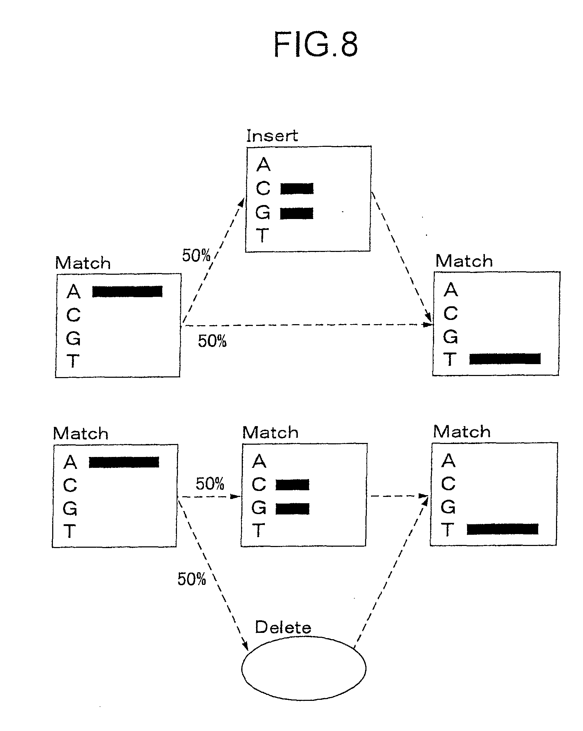

A simple description is now given of the validity of equation (3) using FIG. 8.

As is well known, the number of HMM profiles that can be made from a sequence group is not necessarily limited to one. For example, two HMM profiles (put simply, two HMM profiles where the same portions are handles as M nodes and I modes, respectively) of the content shown schematically in FIG. 8 can be made from the multiple alignment of "ACT", "AGT", "A-T" and "A-T".

When the similarity of two HMM profiles is then determined, it is very likely that a result of "the first and second M node of the HMM profile described on the upper side and the first and third M node of the HMM profile described on the lower side correspond, and these HMM profiles are extremely similar" will be obtained. However, in the first evaluation mode, the existence of the I node is completely ignored and there is therefore the possibility that a result of extreme similarity will not be obtained or that the understanding of the correspondence relationship between M nodes may be erroneous.

On the contrary, in the second evaluation mode, the evaluation value for movement in a diagonal direction is $S(T_i, T_j) \cdot (M_i, M_j)$. $S(T_i, T_j)$ is not a value directly exhibiting the presence of an I node or a D node but $S(T_i, T_j)$ relating to portions where there is the kind of relationship shown in FIG. 8 is a particularly small value ($S(T_i, T_j)$ for the two M nodes shown at the left end of FIG. 8 is 0.25). According to this second evaluation mode, the selection of movement in a diagonal direction is not prominent at portions likely to be selected for movement in a lateral or vertical direction and a more accurate determination of reliability can be carried out than for the first evaluation mode as a result.

Next, operation of the dynamic programming operation unit 23 in the third evaluation mode is described centering on differences in operation with the operation of the dynamic programming operation unit 23 in the second evaluation mode.

The third mode is an evaluation mode that gives more pertinent consideration to the presence of the I nodes and the D nodes. When evaluation in this third evaluation mode is instructed, the dynamic programming operation unit 23 calculates evaluation values $v_{i,j}$ using the following equations:

$$V_{i,j} = \left\{ \begin{array}{c} \dfrac{Sim_{i,j} + V_{i-1,j-1}}{L} \\[2mm] \dfrac{\max(d, D1_{i,j-1}) + V_{i,j-1}}{L'} \\[2mm] \dfrac{\max(d, D2_{i-1,j}) + V_{i-1,j}}{L''} \end{array} \right. \qquad \cdots (4)$$

$$Sim_{i,j} = \frac{Tm_i \cdot Tm_j \cdot S(M_i, M_j) + Ti_i \cdot Ti_j \cdot S(I_i, I_j) + Td_i \cdot Td_j}{|T_i| \cdot |T_j|} \qquad (5)$$

$$D1_{i,j} = \frac{Ti_i \cdot Tm_j \cdot S(I_i, M_j) + Tm_i \cdot Td_j}{|T_i| \cdot |T_j|} \qquad (6)$$

$$D2_{i,j} = \frac{Ti_j \cdot Tm_i \cdot S(I_j, M_i) + Tm_j \cdot Td_i}{|T_i| \cdot |T_j|} \qquad (7)$$

In these equations, $Tm_i$, $Ti_i$ and $Td_i$ are the probability of a transition to an M node, the probability of a transition to an I node, and the probability of a transition to a D node, respectively, with regards to ith M node of the HMM#0. $Tm_j$, $Ti_j$ and $Td_j$ are the probability of a transition to an M node, the probability of a transition to an I node, and the probability of a transition to a D node, respectively, with regards to jth M node of the HMM#1. Further, $I_i$ is an emission probability vector for ith node of HMM#0, and $I_j$ is an emission probability vector for jth I node of HMM#1.

Namely, in the third evaluation mode, as shown in equation (5), a function for a degree of similarity ("$S(M_i, M_j)$") of emission probability vectors for two M nodes, a degree of similarity ("$S(I_i, I_j)$") of emission probability vectors for two I nodes, and transition probability vectors ("$Tm_i$, $Ti_i$, $Td_i$" and "$Tm_j$, $Ti_j$, $Td_j$") is used as the evaluation value for movement in a diagonal direction. In $Sim_{i,j}$ calculated using equation (5) is a value from "0" to "1", as is clear from the fact that the equation obtained by substituting "1" in $S(M_i, M_j)$ and $S(I_i, I_j)$ of equation (5) gives an equation showing the cosine cos ($\Theta$) of the angle ($\Theta$) made by the transition probability vectors $T_i$ and $T_j$.

The functions $D1_{i,j}$ and $D2_{i,j}$ defined in equations (6) and (7) are functions introduced to give more careful consideration to the existence of I nodes or D nodes when selecting paths.

Namely, as is clear from the description given using FIG. 8, by comparing between HMM profiles, there are cases where it is better to go via an I node or a D node of one of the HMM profiles. In order to obtain this result, it is preferable to ensure that the so-called gap cost (value d in equation (3)) is a value corresponding to the state of an existing I node or D node.

When an I node similar to the M node of HMM#1 exists in HMM#0, $Ti_i \times Tm_j \times S(ii, Mj)$ (or conversely, $Ti_j \cdot Tm_i \times S(I_j, M_i)$ can be considered as a function (operator) that will give a large value. Regarding an HMM#0 in which an M node with a high probability of making a transition to a D node exists, $Tm_i \cdot Td_j$ (or conversely, $Tm_j \cdot Td_i$) can be considered as a function (operator) that is large with respect to this M node. The value of $D1_{i,j}$ defined in equation (6) and the larger of the values for d are used as evaluation values for movement in a lateral direction, and $D1_i$ defined in equation (7) and the larger of the values j and d are used as evaluation values for movement in a vertical direction.

In the following, several actual evaluation results obtained by the similarity evaluation device 10 are introduced.

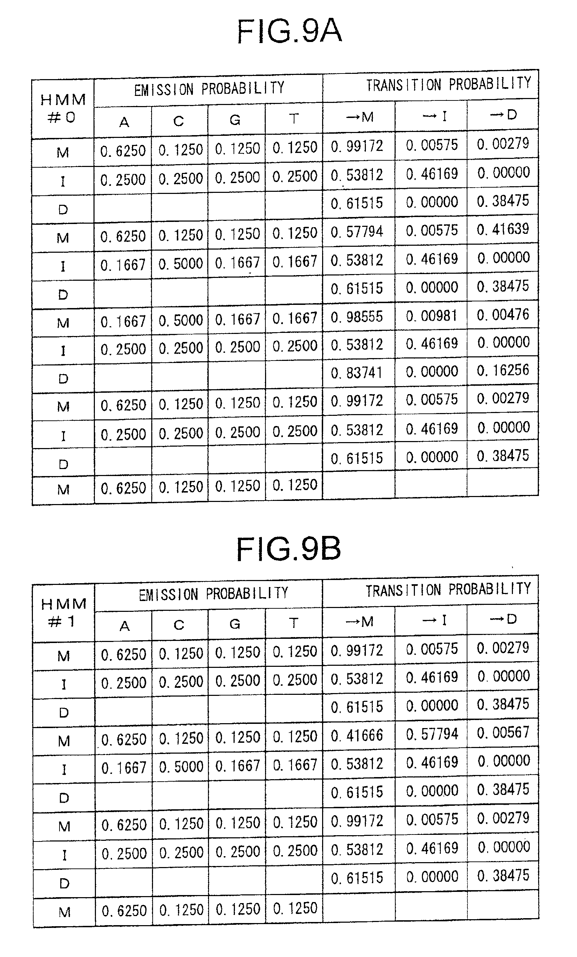

First, evaluation results for the first evaluation mode and evaluation results for the second evaluation mode for HMM#0 and HMM#1 of the content shown in FIG. 9A and FIG. 9B made from multiple alignments referred to as "AACAA", "AACAA", "AA-AA" and "AA-AA" are described.

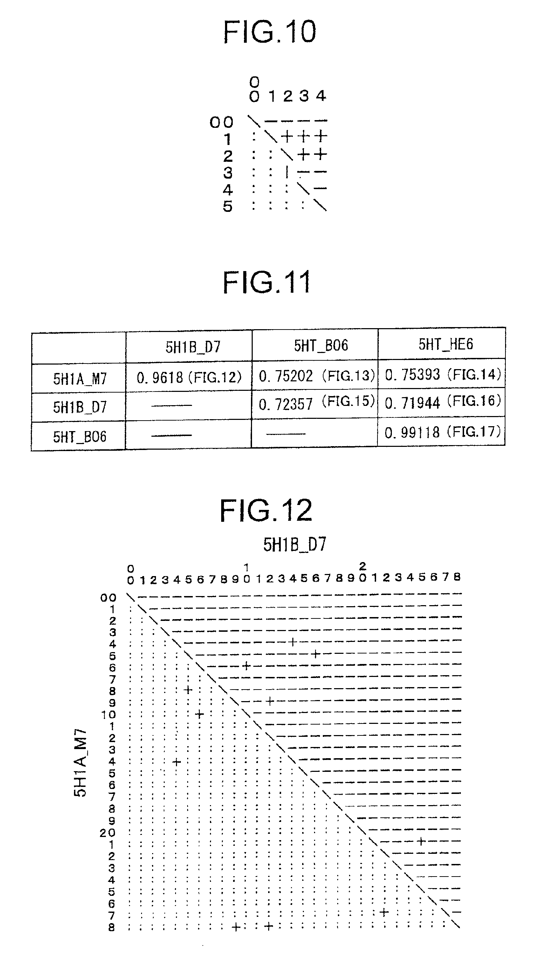

In this case, back trace results for the second evaluation mode are shown in FIG. 10, and a degree of similarity of 0.962821 was calculated as the degree of similarity (evaluation value) for both HMM's. On the other hand, the back trace results for the first evaluation mode were the same as shown in FIG. 10 but a degree of similarity of 0.85 was calculated.

This means that it can be said that the second evaluation mode is an evaluation mode that can calculate a more reliable degree of similarity than the first evaluation mode.

Regarding HMMs with a large amount of data, it can be confirmed that a sufficiently reliable determination can be made using the first evaluation mode.

Specifically, HMM profiles given the respective names of 5H1A_M7, 5H1B_D7, 5HT_BO6, 5HT_HE6 are made from the amino acid sequences for four homology groups and evaluation is carried out on all combinations thereof in the first evaluation mode. The determination results shown in FIG. 11 to FIG. 17 can then be obtained.

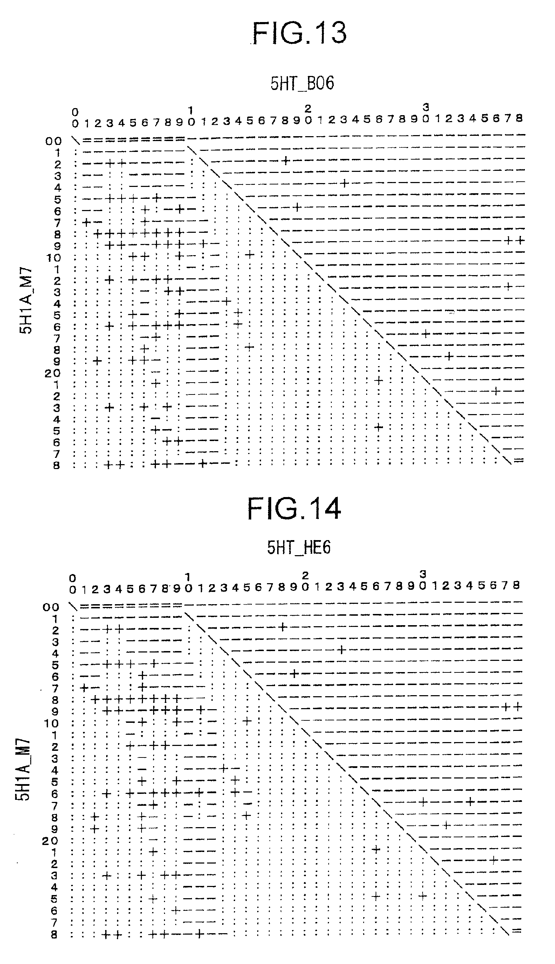

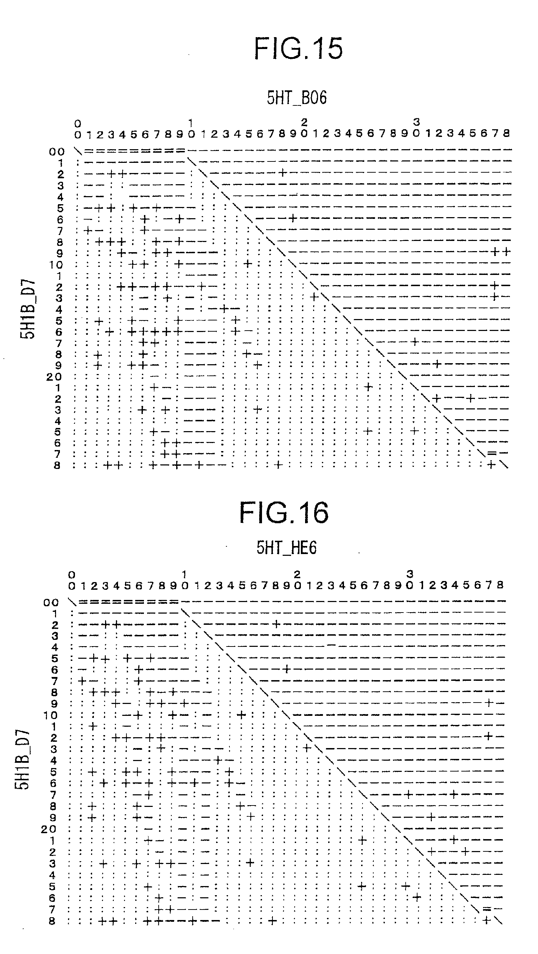

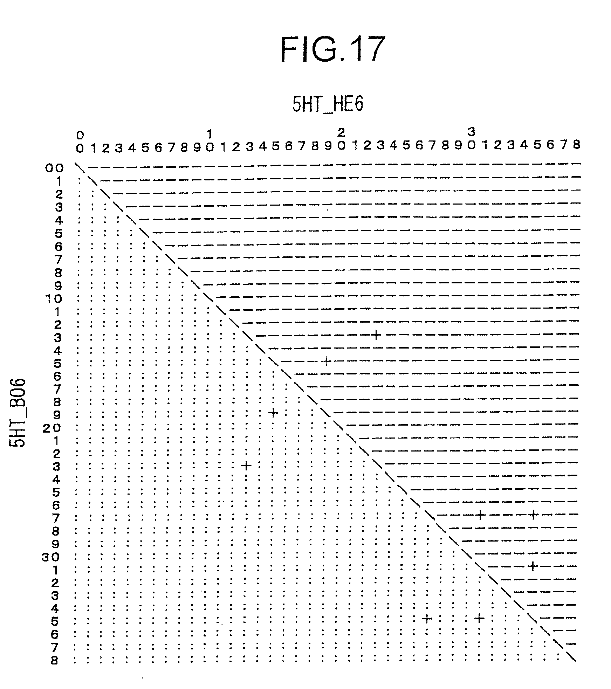

In these drawings FIG. 11 is a diagram showing degrees of similarity (evaluation values) obtained for each of the combinations, and FIG. 12 is a diagram showing back trace results for between 5H1A_M7 and 5H1B_D7. FIG. 13 is a diagram showing back trace results for between 5H1A_M7 and 5HT_B06, and FIG. 14 is a diagram showing back trace results for between 5H1A_M7 and 5HT_HE6. FIG. 15 shows back trace results for between 5H1B_D7 and 5HT_B06. FIG. 16 is a diagram showing back trace results for between 5H1B_D7 and 5HT_HE6. FIG. 17 is a diagram showing back trace results for between 5HT_B06 and 5HT_HE6. In FIG. 12 to FIG. 17, "\", " | " and "=" are symbols denoting portions that have been subjected to a back trace and denote portions that are connected diagonally, from above, and sideways (left). Further, "+", " : " and "-" are symbols denoting portions that have not been subjected to a back trace, and denote portions that are connected diagonally, from above, and sideways (left).

The presence of the extreme similarity of 5H1A_M7 and 5H1B_D7, the extreme similarity of 5HT_BO6 and 5HT_HE6, and the extreme similarity of 5H1A_M7 with the latter half of 5H1B_D7 can therefore be sufficiently understood from the evaluation results for the first evaluation mode.

As described in detail above, the similarity evaluation device 10 of the embodiment is configured so as to obtain a degree of similarity between probability models using dynamic programming techniques. Therefore, if this similarity evaluation device 10 is used, similarity between probability models can be determined at a higher speed than in the related art.

<Modification>

Various modifications are possible for the similarity evaluation device 10 described above. For example, with the dynamic programming operation unit 23 of this embodiment, the values D1 and D2 employed in the processing when operating in the third evaluation mode are values taking into consideration the presence of both D nodes and I nodes. An evaluation value (evaluation function) for when passing through a D node and an evaluation value (evaluation function) for when passing through an I node may therefore be calculated and these values and the maximum value of d values may then be used as an evaluation value for movement in a lateral direction or vertical direction.

Further, the similarity evaluation device 10 is a device where a similarity evaluation program is installed on a computer, and the dynamic processing unit 23 may therefore be an IC, and the technology employed in the similarity evaluation device 10 may also be applied to probability models other than HMMs.

## EP 1 298 534 A2

**Claims**

1. A similarity evaluation method for evaluating similarity between a pair of probability model profiles each including a plurality of items of probability information constituted by a plurality of probability data, including:

   a similarity value calculating step of calculating a similarity value indicating similarity between a pair of items of probability information based on probability information included in one of the pair of probability model profiles and probability information included in the other of the pair of probability model profiles; and
   an evaluating step of carrying out arithmetic processing based on dynamic programming techniques employing a similarity value calculated in the similarity value calculating step as an indicator value for path selection, thereby evaluating similarity of the pair of probability model profiles.

2. The similarity evaluation method according to claim 1, wherein
   the probability model information is probability model information relating to a Hidden Markov Model, and
   the similarity value calculating step involves calculating the similarity value based on a plurality of emission probability data in the probability information included in one of the pair of profiles, and a plurality of emission probability data in the probability information included in the other of the pair of profiles.

3. The similarity evaluation method according to claim 1, wherein
   the probability model information is probability model information relating to a Hidden Markov Model, and
   the similarity value calculating step involves calculating the similarity value based on a plurality of emission probability data and a plurality of transition probability data in the probability information included in one of the pair of profiles, and a plurality of emission probability data and a plurality of transition probability data in the probability information included in the other of the pair of profiles.

4. The similarity evaluation method according to claim 3, wherein
   the similarity value calculating step involves calculating the similarity value by multiplying the cosine squared of an angle made by an emission probability vector constituted by a plurality of emission probability data in the probability information included in one of the pair of profiles, and an emission probability vector constituted by a plurality of emission probability data in the probability information included in the other of the pair of profiles with the cosine squared of an angle made by a transition probability vector constituted by the plurality of transition probability data in the probability information included in said one of the pair of profiles
   and a transition probability vector constituted by the plurality of transition probability data in the probability information included in said other of the pair of profiles.

5. The similarity evaluation method of any one of claim 1 to claim 4, further including a step of outputting information indicating the relationship of similarity between items of probability information included in the pair of profiles based on the results of arithmetic processing carried out in the evaluating step.

6. A similarity evaluation program for making a computer perform a process of evaluating similarity between a pair of probability model profiles each including a plurality of items of probability information constituted by a plurality of probability data, said process comprising:

   a similarity value calculating step of calculating a similarity value indicating similarity between a pair of items of probability information based on probability information included in one of the pair of profiles and probability information included in the other of the pair of profiles; and
   an evaluating step of carrying out arithmetic processing based on dynamic programming techniques employing a similarity value calculated in the similarity value calculating step as an indicator value for path selection, thereby evaluating similarity of the pair of profiles.

7. The similarity evaluation program according to claim 6, wherein
   the probability model information is probability model information relating to a Hidden Markov Model, and
   the similarity value calculating step involves calculating the similarity value based on a plurality of emission probability data in the probability information included in one of the pair of profiles, and a plurality of emission probability data in the probability information included in the other of the pair of profiles.

8. The similarity evaluation program according to claim 6, wherein
   the probability model information is probability model information relating to a Hidden Markov Model, and

the similarity value calculating step involves calculating the similarity value based on a plurality of emission probability data and a plurality of transition probability data in the probability information included in one of the pair of profiles, and a plurality of emission probability data and a plurality of transition probability data in the probability information included in the other of the pair of profiles.

9. The similarity evaluation program according to claim 8, wherein
the similarity value calculating step involves calculating the similarity value by multiplying the cosine squared of an angle made by an emission probability vector constituted by a plurality of emission probability data in the probability information included in one of the pair of profiles and an emission probability vector constituted by a plurality of emission probability data in the probability information included in the other of the pair of profiles with the cosine squared of an angle made by a transition probability vector constituted by the plurality of transition probability data in the probability information included in said one of the pair of profiles
and a transition probability vector constituted by the plurality of transition probability data in the probability information included in said other of the pair of profiles.

10. The similarity evaluation program according to any one of claim 6 to claim 9, wherein said process further includes a step of outputting information indicating the relationship of similarity between pairs of items of probability information included in the pair of profiles based on the results of arithmetic processing carried out in the evaluating step.

11. A similarity evaluation apparatus for evaluating similarity between a pair of probability model profiles each including a plurality of items of probability information constituted by a plurality of probability data, comprising:

a similarity value calculating part for calculating a similarity value indicating similarity between a pair of items of probability information based on probability information included in one of the pair of profiles and probability information included in the other of the pair of profiles; and
an evaluating part for carrying out arithmetic processing based on dynamic programming techniques employing a similarity value calculated by the similarity value calculating part as an indicator value for path selection, thereby evaluating similarity of the pair of profiles.

12. The similarity evaluation apparatus according to claim 11, wherein
the probability model information is probability model information relating to a Hidden Markov Model, and
the similarity value calculating part calculates the similarity value based on a plurality of emission probability data in the probability information included in one of the pair of profiles, and a plurality of emission probability data in the probability information included in the other of the pair of profiles.

13. The similarity evaluation apparatus according to claim 11, wherein
the probability model information is probability model information relating to a Hidden Markov Model, and
the similarity value calculating part calculates the similarity value based on a plurality of emission probability data and a plurality of transition probability data in the probability information included in one of the pair of profiles, and a plurality of emission probability data and a plurality of transition probability data in the probability information included in the other of the pair of profiles.

14. The similarity evaluation apparatus according to claim 13, wherein
the similarity value calculating part calculates the similarity value by multiplying the cosine squared of an angle made by an emission probability vector constituted by a plurality of emission probability data in the probability information included in one of the pair of profiles and an emission probability vector constituted by a plurality of emission probability data in the probability information included in the other of the pair of profiles with the cosine squared of an angle made by a transition probability vector constituted by the plurality of transition probability data in the probability information included in the one of the pair of profiles and a transition probability vector constituted by the plurality of transition probability data in the probability information included in the other of the pair of profiles.

15. The similarity evaluation apparatus according to any one of claim 11 to claim 14, further comprising a part for outputting information indicating the relationship of similarity between pairs of items of probability information included in the pair of probability model information based on the results of arithmetic processing carried out by the evaluating part.

# FIG.1

SIMILARITY EVALUATION DEVICE — 20

PROBABILITY MODEL INFORMATION ACQUISITION UNIT — 21

PROBABILITY MODEL INFORMATION STORAGE UNIT — 22

DYNAMIC PROGRAMMING OPERATION UNIT — 23

EVALUATION RESULTS STORAGE UNIT — 24

EVALUATION RESULTS PRESENTATION UNIT — 25

# FIG.2

# FIG.3

# FIG.4

# FIG.5

START

S101

CALCULATE SIMILARITY (S VALUE) FOR EVERY NODE

S102

CALCULATE EVALUATION VALUES AND STORE PATH INFORMATION
( ACTUAL ARITHMETIC PROCESSING
EMPLOYING DYNAMIC PROGRAMMING TECHNIQUES )

S103

PERFORM BACK TRACE, STORE RESULTS
IN EVALUATION RESULTS STORAGE UNIT

END

## FIG.6A

| HO | EMISSION PROBABILITY | | | |
|---|---|---|---|---|
| | A | C | G | T |
| FIRST NODE | 0.63 | 0.13 | 0.13 | 0.13 |
| SECOND NODE | 0.63 | 0.13 | 0.13 | 0.13 |
| THIRD NODE | 0.63 | 0.13 | 0.13 | 0.13 |
| FOURTH NODE | 0.63 | 0.13 | 0.13 | 0.13 |

## FIG.6B

| H1 | EMISSION PROBABILITY | | | |
|---|---|---|---|---|
| | A | C | G | T |
| FIRST NODE | 0.63 | 0.13 | 0.13 | 0.13 |
| SECOND NODE | 0.38 | 0.38 | 0.13 | 0.13 |
| THIRD NODE | 0.38 | 0.13 | 0.38 | 0.13 |
| FOURTH NODE | 0.63 | 0.13 | 0.13 | 0.13 |

⇓

## FIG.6C

| H1 \ HO | 1 | 2 | 3 | 4 |
|---|---|---|---|---|
| 1 | 1.00 | 0.71 | 0.71 | 1.00 |
| 2 | 1.00 | 0.71 | 0.71 | 1.00 |
| 3 | 1.00 | 0.71 | 0.71 | 1.00 |
| 4 | 1.00 | 0.71 | 0.71 | 1.00 |

⇓

## FIG.6D

| H1 \ HO | 0 | 1 | 2 | 3 | 4 |
|---|---|---|---|---|---|
| 0 | 0.00 | 0.10 | 0.10 | 0.10 | 0.10 |
| 1 | 0.10 | 1.00 | 0.55 | 0.40 | 0.33 |
| 2 | 0.10 | 0.55 | 0.86 | 0.60 | 0.55 |
| 3 | 0.10 | 0.40 | 0.60 | 0.81 | 0.70 |
| 4 | 0.10 | 0.33 | 0.48 | 0.63 | 0.86 |

## FIG.6E

| H1 \ HO | 0 | 1 | 2 | 3 | 4 |
|---|---|---|---|---|---|
| 0 | | ↖ | ← | ← | ← | ← |
| 1 | ↑ | ↖ | ← | ← | ← |
| 2 | ↑ | ↖ | ↖ | ↖ | ↖ |
| 3 | ↑ | ↑ | ↖ | ↖ | ↖ |
| 4 | ↑ | ↑ | ↖ | ↖ | ↖ |

FIG.7

# FIG.8

## FIG.9A

| HMM #0 | EMISSION PROBABILITY | | | | TRANSITION PROBABILITY | | |
|---|---|---|---|---|---|---|---|
| | A | C | G | T | →M | →I | →D |
| M | 0.6250 | 0.1250 | 0.1250 | 0.1250 | 0.99172 | 0.00575 | 0.00279 |
| I | 0.2500 | 0.2500 | 0.2500 | 0.2500 | 0.53812 | 0.46169 | 0.00000 |
| D | | | | | 0.61515 | 0.00000 | 0.38475 |
| M | 0.6250 | 0.1250 | 0.1250 | 0.1250 | 0.57794 | 0.00575 | 0.41639 |
| I | 0.1667 | 0.5000 | 0.1667 | 0.1667 | 0.53812 | 0.46169 | 0.00000 |
| D | | | | | 0.61515 | 0.00000 | 0.38475 |
| M | 0.1667 | 0.5000 | 0.1667 | 0.1667 | 0.98555 | 0.00981 | 0.00476 |
| I | 0.2500 | 0.2500 | 0.2500 | 0.2500 | 0.53812 | 0.46169 | 0.00000 |
| D | | | | | 0.83741 | 0.00000 | 0.16256 |
| M | 0.6250 | 0.1250 | 0.1250 | 0.1250 | 0.99172 | 0.00575 | 0.00279 |
| I | 0.2500 | 0.2500 | 0.2500 | 0.2500 | 0.53812 | 0.46169 | 0.00000 |
| D | | | | | 0.61515 | 0.00000 | 0.38475 |
| M | 0.6250 | 0.1250 | 0.1250 | 0.1250 | | | |

## FIG.9B

| HMM #1 | EMISSION PROBABILITY | | | | TRANSITION PROBABILITY | | |
|---|---|---|---|---|---|---|---|
| | A | C | G | T | →M | →I | →D |
| M | 0.6250 | 0.1250 | 0.1250 | 0.1250 | 0.99172 | 0.00575 | 0.00279 |
| I | 0.2500 | 0.2500 | 0.2500 | 0.2500 | 0.53812 | 0.46169 | 0.00000 |
| D | | | | | 0.61515 | 0.00000 | 0.38475 |
| M | 0.6250 | 0.1250 | 0.1250 | 0.1250 | 0.41666 | 0.57794 | 0.00567 |
| I | 0.1667 | 0.5000 | 0.1667 | 0.1667 | 0.53812 | 0.46169 | 0.00000 |
| D | | | | | 0.61515 | 0.00000 | 0.38475 |
| M | 0.6250 | 0.1250 | 0.1250 | 0.1250 | 0.99172 | 0.00575 | 0.00279 |
| I | 0.2500 | 0.2500 | 0.2500 | 0.2500 | 0.53812 | 0.46169 | 0.00000 |
| D | | | | | 0.61515 | 0.00000 | 0.38475 |
| M | 0.6250 | 0.1250 | 0.1250 | 0.1250 | | | |

# FIG.10

```
  0
  0 1 2 3 4
00 \ — — — —
 1 : \ + + +
 2 : : \ + +
 3 : : | — —
 4 : : : \ —
 5 : : : : \
```

# FIG.11

|         | 5H1B_D7         | 5HT_B06          | 5HT_HE6          |
|---------|-----------------|------------------|------------------|
| 5H1A_M7 | 0.9618 (FIG.12) | 0.75202 (FIG.13) | 0.75393 (FIG.14) |
| 5H1B_D7 | —               | 0.72357 (FIG.15) | 0.71944 (FIG.16) |
| 5HT_B06 | —               | —                | 0.99118 (FIG.17) |

# FIG.12

5H1B_D7

5H1A_M7

# FIG.13

## 5HT_B06

# FIG.14

## 5HT_HE6

# FIG.15

5HT_B06

# FIG.16

5HT_HE6

# FIG.17

5HT_HE6